Europäisches Patentamt

European Patent Office

Office européen des brevets

(11) Veröffentlichungsnummer: **0 456 024 A1**

(12) **EUROPÄISCHE PATENTANMELDUNG**

(21) Anmeldenummer: 91106426.9

(22) Anmeldetag: 22.04.91

(51) Int. Cl.⁵: **F16L 53/00, B60S 1/48,** H05B 3/56

(30) Priorität: 02.05.90 DE 9004980 U

(43) Veröffentlichungstag der Anmeldung: **13.11.91 Patentblatt 91/46**

(84) Benannte Vertragsstaaten: **AT BE DE FR GB IT LU NL SE**

(71) Anmelder: **REHAU AG + Co Rheniumhaus W-8673 Rehau(DE)**

(72) Erfinder: **Der Erfinder hat auf seine Nennung verzichtet**

(54) **Elektrisch beheizter Schlauch.**

㊗ Die Erfindung betrifft einen elektrisch beheizten Schlauch, insbesondere zur Beheizung von Scheibenwaschanlagen in Fahrzeugen. Der Schlauch (1) besitzt einen mit elektrischen Anschlüssen versehenen Heizleiter (2), damit die Heizenergie zu der im Lumen des Schlauches befindlichen Waschflüssigkeit transportiert werden kann. Der Heizleiter (2) ist dabei längsverlaufend im Lumen des Schlauches angeordnet. Die Erfindung wird darin gesehen, daß der Heizleiter (2) in Form eines Koaxialleiters mit innenliegendem Kupferleiter (23), von diesem mit einer Isolierschicht (24) getrennten leitenden Drahtgeflecht (25) und einer äußeren Isolierung aufgebaut ist. Der Kupferleiter (23) und das Drahtgeflecht (25) sind im Bereich eines Schlauchendes leitend miteinander verbunden. Am anderen freien Ende des Schlauches ist der Heizleiter unter Abdichtung herausgeführt und der Kupferleiter (23) sowie das Drahtgeflecht (25) sind gegeneinander isoliert in einem Steckerelement (21) vereinigt. Dieses Steckerelement (21) ist mit einer Stromquelle durch einfachen Steckvorgang verbindbar.

Fig. 1

Die Neuerung betrifft einen elektrisch beheizten Schlauch, insbesondere zur Beheizung von Scheibenwaschanlagen in Fahrzeugen, mit einem mit elektrischen Anschlüssen versehenen Heizleiter zur Verbringung der Heizenergie zu der im Lumen des Schlauches befindlichen Waschflüssigkeit, wobei der Heizleiter als isolierte Einheit längsverlaufend im Lumen des Schlauches angeordnet ist.

Aus dem Deutschen Gebrauchsmuster 86 07 830 ist eine elektrische Heizvorrichtung für Waschflüssigkeit in Scheibenwaschanlagen von Fahrzeugen bekannt. Der Heizdraht liegt bei dieser Vorrichtung als isolierte Leitung im Lumen des die Waschflüssigkeit führenden Schlauches. Als nachteilig hat sich dabei herausgestellt, daß bei diesem System jeweils zwei Drähte, nämlich der eigentliche Heizleiter und der Rückführdraht isoliert nebeneinander im Schlauchlumen angeordnet sind. Dadurch sind stromtechnisch bei jeder Ein- und Ausleitung jeweils zwei Anschlüsse für die Stromführung notwendig. Hierbei handelt es sich um eine aufwendige Anschlußtechnik, bei der das System zur Bildung von Abzweigungen bzw. Anschlüssen immer wieder unterbrochen werden muß. Dieser Nachteil tritt besonders bei Düsenabzweigungen und ähnlichen Elementen in Erscheinung.

Die Neuerung hat sich demgegenüber die Aufgabe gestellt, die geschilderten Nachteile zu vermeiden und ein Heizsystem für Schläuche anzugeben, das neben seiner einfachen Herstellbarkeit eine unkomplizierte Anschlußtechnik beinhaltet.

Neuerungsgemäß wird dazu vorgeschlagen, daß der Heizleiter in Form eines Koaxialleiters mit innenliegendem Kupferleiter, von diesem mit einer Isolierschicht getrenntem leitenden Drahtgeflecht und äußerer Isolierung aufgebaut ist, daß der Kupferleiter und das Drahtgeflecht im Bereich eines Schlauchendes leitend miteinander verbunden sind, und daß der Heizleiter am anderen freien Ende des Schlauches unter Abdichtung herausgeführt ist und der Kupferleiter sowie das Drahtgeflecht gegeneinander isoliert in einem Steckerelement vereinigt sind, welches mit einer Stromquelle durch einfachen Steckvorgang verbindbar ist.

Die Vorteile der Neuerung werden darin gesehen, daß nur ein kompakter Heizleiter im Wasserlumen angeordnet ist. Der Heizleiter ragt nur aus einem Ende der Schlauchleitung heraus und es sind einfache T-Abzweigungen für Düsenabgänge verwendbar. Für die Abzweigungen sind daher keine Systemunterbrechungen erforderlich und die Beheizung kann unkompliziert für Schlauchlumina, Flüssigkeitsbehältnisse usw. eingesetzt werden.

In der Zeichnung ist ein Ausführungsbeispiel der neuerungsgemäßen Schlauchheizung schematisch dargestellt; es zeigt:

Fig. 1 eine Schlauchleitung mit Abzweigungen und innenliegendem Heizleiter;

Fig. 2 einen Querschnitt durch den Heizleiter;

Fig. 3 die Endenverbindung des Heizleiters;

Fig. 4 die Steckeranbindung von Kupferleiter und leitendem Drahtgeflecht.

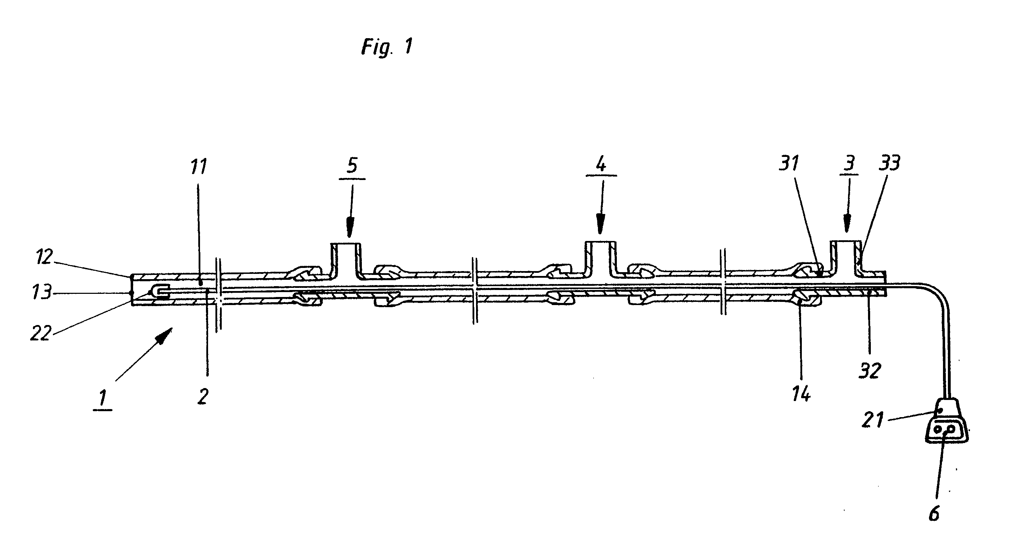

Fig. 1 zeigt die Schlauchleitung 1 mit dem im Lumen 11 angeordneten Heizleiter 2. Die Schlauchleitung 1 ist an ihrem einen freien Ende 12 durch ein Verschlußelement 13 dicht verschlossen. An ihrem anderen freien Ende 14 ist ein T-förmiges Verbindungsstück 3 mit seinem Stutzen 31 dicht in das Schlauchlumen 11 eingesetzt. Der Stutzen 31 verläuft in axialer Richtung und geht in den ebenfalls axial verlaufenden Stutzen 32 über. Von den beiden axial verlaufenden Stutzen 31, 32 ragt mittig einseitig der Stutzen 33 ab.

Der Stutzen 32 ist gegenüber dem aus seinem Lumen austretenden Heizleiter 2 abgedichtet.

Die Schlauchleitung 1 zeigt auf ihre Länge verteilt weitere T-förmige Anschlußstutzen 4, 5. Diese Anschlußstutzen 4, 5 können in gleicher Weise aufgebaut sein wie der Anschlußstutzen 3. Es handelt sich in allen Fällen um einfache Schlauchanschlüsse, die entweder als axiale Verbinder, als T-förmige Anschlußstücke, als Y-förmige Verbinder usw. ausgelegt sein können. Diese Anschlußstücke können beispielsweise direkt mit Düsenöffnungen zum Verspritzen von Waschwasser auf beispielsweise Fensterscheiben von Kraftfahrzeugen oder sonstigen Anschlüssen verbunden sein.

Der aus dem Lumen herausgeführte Heizleiter 2 ist über den Stecker 21 mit einer Stromquelle 6 verbunden. An seinem freien Ende 22 im Bereich des freien Endes 12 der Schlauchleitung 1 ist der Kupferleiter und das leitende Drahtgeflecht leitend miteinander verbunden und diese leitende Verbindung ist durch eine Isolierschicht abgedeckt.

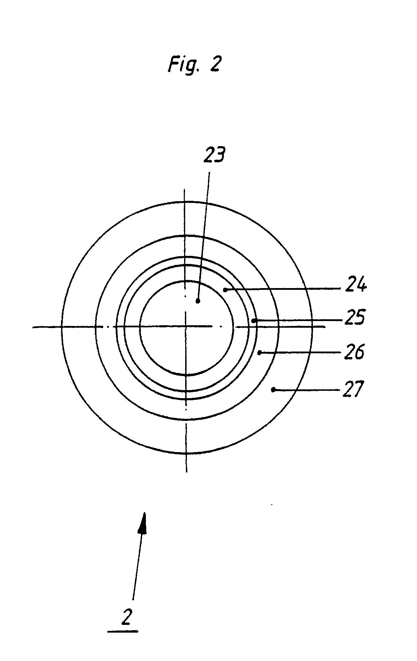

Die Fig. 2 zeigt einen Querschnitt durch den Heizleiter 2. Im Aufbau von innen nach außen besteht der Heizleiter 2 aus einer Kupferlitze 23, die von einer elektrischen und thermischen Isolierung 24, z.B. aus Polyamid umgeben ist.

Auf der Isolierung 24 ist der Heizleiterdraht in Form eines leitenden Drahtgeflechts 25 angeordnet. Dieses leitende Drahtgeflecht kann beispielsweise aus einem Kupfergeflecht bestehen. Auf dem Drahtgeflecht 25 ist wiederum eine thermische Isolierung 26, die beispielsweise aus Glasseide bestehen kann, angeordnet. Der ganze Aufbau ist schließlich mit einer knickfesten und wasserdichten Isolierung 27, die z.B. aus Polyamid bestehen kann, umgeben.

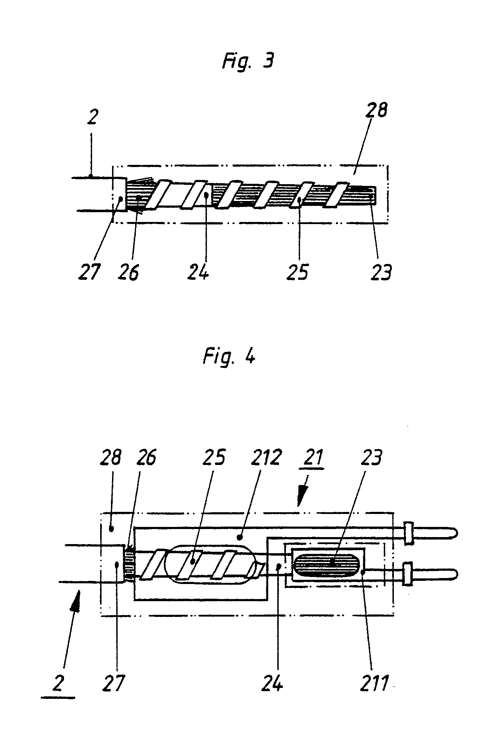

Fig. 3 zeigt die leitende Verbindung des Kupferleiters 23 und des Drahtgeflechts 25 im Bereich des freien Schlauchendes 12. Hierbei ist die wasserdichte Isolierung 27 und die thermische Isolierung 26 abisoliert worden. Das leitende Drahtgeflecht 25 ist von dem weiteren Aufbau abgehoben und die Isolierung 24 ist ebenfalls entfernt worden. Das leitende Drahtgeflecht 25 ist danach auf den Kupferleiter 23 aufgebracht und dort verlötet worden. Das freie Ende 22 des Heizleiters 2 wird danach mit einer wasserdichten Isolierung 28 umgeben.

Fig. 4 zeigt schließlich die Steckeranbindung von Kupferleiter 23 und leitendem Drahtgeflecht 25 über den Stecker 21. Hierbei erfolgt die Abisolierung des Kupferleiters und des leitenden Drahtgeflechts wie zu Fig. 3 beschrieben. Danach wird der Kupferleiter 23 mit einem kurzen Steckerstift 211 und das leitende Drahtgeflecht 25 mit einem langen Steckerstift 212 leitend verbunden. Die Steckerstifte 211, 212 werden danach gegenseitig elektisch und thermisch isoliert und der ganze Aufbau wird mit einer knickfesten und wasserdichten Isolierung 28 umgeben.

**Patentansprüche**

1. Elektrisch beheizter Schlauch, insbesondere zur Beheizung von Scheibenwaschanlagen in Fahrzeugen, mit einem mit elektrischen Anschlüssen versehenen Heizleiter zur Verbringung der Heizenergie zu der im Lumen des Schlauches befindlichen Waschflüssigkeit, wobei der Heizleiter längsverlaufend im Lumen des Schlauches angeordnet ist, dadurch gekennzeichnet, daß der Heizleiter (2) in Form eines Koaxialleiters mit innenliegendem Kupferleiter (23), von diesem mit einer Isolierschicht (24) getrenntem leitenden Drahtgeflecht (25) und äußerer Isolierung (26, 27) aufgebaut ist, daß der Kupferleiter (23) und das Drahtgeflecht (25) im Bereich eines Schlauchendes (12) leitend miteinander verbunden sind, und daß der Heizleiter (2) am anderen freien Ende (14) des Schlauches (2) unter Abdichtung herausgeführt ist und der Kupferleiter (23) sowie das Drahtgeflecht (25) gegeneinander isoliert in einem Steckerelement (21) vereinigt sind, welches mit einer Stromquelle (6) durch einfachen Steckvorgang verbindbar ist.

Fig. 1

EP 0 456 024 A1

Fig. 2

**Fig. 3**

**Fig. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 414 284 (HERAEUS-WITTMANN GMBH) <br> * Ansprüche 1,2,5,6; Abbildungen 2,4,5 * <br> — — — | 1 | F 16 L 53/00 <br> B 60 S 1/48 <br> H 05 B 3/56 |
| A | US-A-4 423 311 (VARNEY, SR) <br> * Spalte 2, Zeile 65 - Zeile 67; Abbildung 1 * <br> — — — — — | 1 | |
| | | | **RECHERCHIERTE SACHGEBIETE (Int. Cl.5)** |
| | | | F 16 L <br> B 60 S <br> H 05 B |

Der vorliegende Recherchenbericht wurde für alle Patentansprüche erstellt

| Recherchenort | Abschlußdatum der Recherche | Prüfer |
|---|---|---|
| Den Haag | 03 September 91 | HUBEAU M.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument